(19) Europäisches Patentamt / European Patent Office / Office européen des brevets

(11) **EP 4 561 195 A1**

(12) **EUROPEAN PATENT APPLICATION**
published in accordance with Art. 153(4) EPC

(43) Date of publication:
**28.05.2025 Bulletin 2025/22**

(21) Application number: **23842411.3**

(22) Date of filing: **20.07.2023**

(51) International Patent Classification (IPC):
*H04W 52/14* (2009.01)

(52) Cooperative Patent Classification (CPC):
**H04W 52/14; H04W 72/044; H04W 72/23;**
Y02D 30/70

(86) International application number:
**PCT/CN2023/108455**

(87) International publication number:
**WO 2024/017349 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.07.2022 CN 202210869965**

(71) Applicant: **Beijing Unisoc Communications
Technology
Co., Ltd
Beijing 100083 (CN)**

(72) Inventor: **MA, Dawei
Beijing 100083 (CN)**

(74) Representative: **Ipside
7-9 Allée Haussmann
33300 Bordeaux Cedex (FR)**

(54) **POWER CONTROL METHOD AND APPARATUS, AND DEVICE**

(57) The present application provides a power control method, apparatus, and device, the method includes: a terminal device receives configuration information, where the configuration information includes a bandwidth of a first sensing signal, a maximum allowable transmit power corresponding to the first sensing signal, and an initial power component; and at a target time, sends the first sensing signal according to a transmit power of the first sensing signal at the target time, where the transmit power of the first sensing signal at the target time is determined according to the configuration information. In this way, the terminal device determines the transmit power of the first sensory signal at the target time based on the configuration information, achieving control of the transmit power of a sensing signal, and ensuring normal transmission of the sensing signal.

```
┌─────────────────┐                    ┌────────────────┐
│ Terminal device │                    │ Network device │
└─────────────────┘                    └────────────────┘
         ▲          Configuration information    │
         │◄───────────────────────────────────────
┌──────────────────────────────────┐   ┌──────────────────────────────────┐
│ S201, receive the configuration  │   │ S201, send configuration          │
│ information                      │   │ information, where the            │
└──────────────────────────────────┘   │ configuration information includes│
┌──────────────────────────────────┐   │ a bandwidth of a first sensing    │
│ S202, at a target time, send the │   │ signal, the maximum allowable     │
│ first sensing signal according   │   │ transmit power of the first       │
│ to a transmit power of the first │   │ sensing signal, and an initial    │
│ sensing signal at the target     │   │ power component of the first      │
│ time, where the transmit power   │   │ sensing signal                    │
│ of the first sensing signal at   │   └──────────────────────────────────┘
│ the target time is determined    │
│ based on the configuration       │
│ information                      │
└──────────────────────────────────┘
```

FIG. 2

Processed by Luminess, 75001 PARIS (FR)

**Description**

The present application claims the priority of the Chinese patent application No. 202210869965.9, entitled "POWER CONTROL METHOD, APPARATUS AND DEVICE" filed with the China National Intellectual Property Administration on July 22, 2022, the entire contents of which are incorporated by reference in the present application.

**TECHNICAL FIELD**

The present application relate to the field of communication technology and, in particular, to a power control method, apparatus and device.

**BACKGROUND**

With the continuous convergence of communication signal frequency bands and sensing signal frequency bands, integrated communication and sensing has gradually become a development trend of future communication systems. The integrated communication and sensing can integrate functions of communication and sensing, enabling communication systems to have both functions, and sense physical characteristics of a surrounding environment while transmitting information through wireless channels, thereby improving communication performance.

In a scenario of the integrated sensing and communication, a terminal device not only needs to send communication signals, but also needs to send sensing signals on the same carrier. In this scenario, how to send sensing signals has become an urgent problem to be solved.

**SUMMARY**

The present application provides a power control method, apparatus and device to implement control of a transmit power of a sensing signal and ensure normal transmission of the sensing signal.

In a first aspect, an embodiment of the present application provides a power control method, including:

receiving configuration information, where the configuration information includes a bandwidth of a first sensing signal, a maximum allowable transmit power corresponding to the first sensing signal, and an initial power component corresponding to the first sensing signal;

sending, at a target time, the first sensing signal according to a transmit power of the first sensing signal at the target time, where the transmit power of the first sensing signal at the target time is determined based on the configuration information.

In a possible implementation, the transmit power of the first sensing signal at the target time is specifically determined based on the configuration information and a compensation power of the first sensing signal, where the compensation power is determined based on relevant data of a PL-RS, and the PL-RS is included in the configuration information.

In a possible implementation, the PL-RS is the first sensing signal, or the PL-RS is a sensing signal other than the first sensing signal.

In a possible implementation, the relevant data of the PL-RS includes a pathloss compensation factor and an average pathloss of the PL-RS, where the compensation power of the first sensing signal is a product of the pathloss compensation factor and the average pathloss of the PL-RS, and the average pathloss is determined based on a historical transmit power of the PL-RS and a historical received power of the PL-RS.

In a possible implementation, the relevant data of the PL-RS includes an average power and an expected received power of the PL-RS, where the average power is an average historical received power of the PL-RS, and the compensation power of the first sensing signal is a difference between the expected received power of the PL-RS and the average power.

In a possible implementation, the relevant data of the PL-RS includes a previous received power of the PL-RS and the expected received power of the PL-RS, and the compensation power of the first sensing signal is a difference between the expected received power of the PL-RS and the previous received power of the PL-RS.

In a possible implementation, the transmit power of the first sensing signal at the target time is a smaller value between a candidate transmit power and the maximum allowable transmit power, and the candidate transmit power is obtained by linearly multiplying or logarithmically adding the initial power component, the compensation power of the first sensing signal, and a bandwidth factor, where the bandwidth factor is determined based on the bandwidth of the first sensing signal.

In a possible implementation, the transmit power of the first sensing signal is less than or equal to an uplink transmit power at the target time determined by a terminal device.

In a possible implementation, the transmit power of the first sensing signal is less than or equal to a sidelink transmit power at the target time determined by a terminal device.

In a second aspect, an embodiment of the present application provides another power control method, including: sending configuration information, where the configuration information includes a bandwidth of a first sensing signal, a maximum allowable transmit power corresponding to the first sensing signal, and an initial power component corresponding to the first sensing signal, and the configuration information is used to determine a transmit power of the first sensing signal at a target time.

In a third aspect, an embodiment of the present application provides a power control apparatus, including:

a receiving module, configured to receive configuration information, where the configuration information includes a bandwidth of a first sensing signal, a maximum allowable transmit power corresponding to the first sensing signal, and an initial power component corresponding to the first sensing signal;
a sending module, configured to send the first sensing signal at a target time according to a transmit power of the first sensing signal at the target time, where the transmit power of the first sensing signal at the target time is determined according to the configuration information.

In a possible implementation, the transmit power of the first sensing signal at the target time is determined based on the configuration information and a compensation power of the first sensing signal, where the compensation power is determined based on relevant data of a PL-RS, and the PL-RS is included in the configuration information.

In a possible implementation, the PL-RS is the first sensing signal, or the PL-RS is a sensing signal other than the first sensing signal.

In a possible implementation, the relevant data of the PL-RS includes a pathloss compensation factor and an average pathloss of the PL-RS, and the compensation power of the first sensing signal is a product of the pathloss compensation factor and the average pathloss of the PL-RS, where the average pathloss is determined based on a historical transmit power of the PL-RS and a historical received power of the PL-RS.

In a possible implementation, the relevant data of the PL-RS includes an average power and an expected received power of the PL-RS, where the average power is an average historical received power of the PL-RS, and the compensation power of the first sensing signal is a difference between the expected received power of the PL-RS and the average power.

In a possible implementation, the relevant data of the PL-RS includes a previous received power of the PL-RS and an expected received power of the PL-RS, where the compensation power of the first sensing signal is a difference between the expected received power of the PL-RS and the previous received power of the PL-RS.

In a possible implementation, the transmit power of the first sensing signal at the target time is a smaller value between a candidate transmit power and the maximum allowable transmit power, and the candidate transmit power is obtained by linearly multiplying or logarithmically adding the initial power component, the compensation power of the first sensing signal, and a bandwidth factor, where the bandwidth factor is determined based on the bandwidth of the first sensing signal.

In a possible implementation, the transmit power of the first sensing signal is less than or equal to an uplink transmit power at the target time determined by a terminal device.

In a possible implementation, the transmit power of the first sensing signal is less than or equal to a sidelink transmit power at the target time determined by the terminal device.

In a fourth aspect, an embodiment of the present application provides another power control apparatus, including:
a sending module, configured to send configuration information, where the configuration information includes a bandwidth of a first sensing signal, a maximum allowable transmit power corresponding to the first sensing signal, and an initial power component corresponding to the first sensing signal, and the configuration information is used to determine a transmit power of the first sensing signal at a target time.

In a fifth aspect, an embodiment of the present application provides a power control device, including: a processor, and a memory;

the memory stores computer execution instructions;
the processor executes the computer execution instructions stored in the memory to implement the method as described in any one of the first aspect or the second aspect.

In a sixth aspect, an embodiment of the present application provide a computer-readable storage medium storing computer execution instructions, and the computer execution instructions are used to implement the method described in any one of the first aspect or the second aspect when executed.

In a seventh aspect, an embodiment of the embodiment of the present application provides a computer program product including a computer program, and the method described in any one of the first aspect or the second aspect is implemented when the computer program is executed.

In an eighth aspect, an embodiment of the present application provides a chip storing a computer program, and the method described in any one of the first aspect or the second aspect is implemented when the computer program is executed by the chip.

In a ninth aspect, an embodiment of the present application provides a chip module storing a computer program, and the method described in any one of the first aspect or the second aspect is implemented when the computer program is executed by the chip.

In the power control method, apparatus, and device provided in the embodiments of the present application, the terminal device receives the configuration information, where the configuration information includes the bandwidth of the first sensing signal, the maximum allowable transmit power corresponding to the first sensing signal, and the initial power component, and at the target time, sends the first sensing signal according to the transmit power of the first sensing signal at the target time, where the transmit power of the first sensing signal at the target time is determined based on the configuration information. In this way, the terminal device could determine the transmit power of the first sensing signal at the target time based on the configuration information, achieving control of the transmit power of the sensing signal and ensuring normal transmission of the sensing signal.

## BRIEF DESCRIPTION OF DRAWINGS

In order to provide a clearer explanation of embodiments or technical solutions in the present application or existing technology, a brief introduction will be given to accompanying drawings required for description of the embodiments or existing technology. It is obvious that the accompanying drawings described below are only some embodiments of the present application. For those skilled in the art, other embodiments can be obtained based on these accompanying drawings without creative efforts.

FIG. 1 is a schematic diagram of an application scenario provided by an embodiment of the present application.
FIG. 2 is a flowchart diagram of a power control method provided by an embodiment of the present application.
FIG. 3 is a flowchart diagram of another power control method provided by an embodiment of the present application.
FIG. 4 is a schematic structural diagram of a power control apparatus provided by an embodiment of the present application.
FIG. 5 is a schematic structural diagram of another power control apparatus provided by an embodiment of the present application.
FIG. 6 is a schematic structural diagram of a power control device provided by an embodiment of the present application.

## DESCRIPTION OF EMBODIMENTS

In order to enable those skilled in the art to better understand technical solutions of the present application, a further detailed description of the present application is provided below in conjunction with accompanying drawings and embodiments. It should be understood that specific embodiments and accompanying drawings described herein are only for the purpose of explaining the present application, and are not intended to limit the present application.

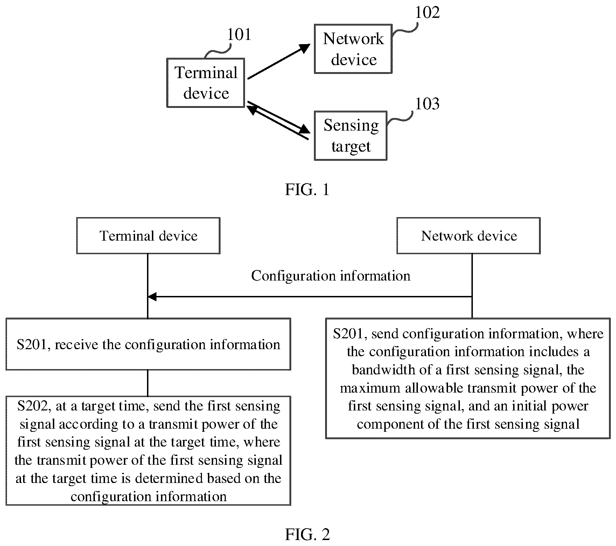

FIG. 1 is a schematic diagram of an application scenario provided by an embodiment of the present application. Please refer to FIG. 1, which includes a terminal device 101, a network device 102, and a sensing target 103.

The terminal device 101 can also be referred to as a user equipment (user equipment, UE), an access terminal, a user unit, a user station, a mobile station, a mobile platform, a remote station, a remote terminal, a mobile device, a user terminal, a terminal, a wireless communication device, a user agent or a user device, and the like. The terminal device 101 can specifically be a device that provides voice/data connectivity to a user, such as handheld devices, on-vehicle devices and the like with wireless connectivity. Specifically, it can be: a mobile phone (mobile phone), a pad (pad), a computer with wireless transceiver function (such as laptop, handheld computer, and the like), a mobile internet device (mobile internet device, MID), a virtual reality (virtual reality, VR) device, an augmented reality (augmented reality, AR) device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with wireless communication capabilities, a computing device or other processing devices connected to a wireless modem, an on-vehicle device, a wearable device, a terminal device in 5G networks or future evolved public land mobile networks (public land mobile network, PLMN), and the like.

The wearable device can also be referred to as a wearable smart device, which is a general term for devices that could be worn and that are intelligently designed and developed by applying wearable technology to daily wear, such as glasses, gloves, watches, clothing, shoes and the like. The wearable devices are portable devices that can be worn directly on the body or integrated into clothing or accessories of users. The wearable devices are not just hardware devices, but also achieve powerful functions through software support, data interaction, and cloud interaction. In a broad sense, wearable smart devices include fully functionalized, large-sized and achieves complete or partial functions without relying on smartphones, such as smartwatches or smart glasses and the like, as well as that only focus on a certain type of application function and need to be used in conjunction with other devices such as the smartphones, such as various kinds of smart bracelets and smart jewelry for physical sign monitoring.

In addition, the terminal device can also be a terminal device in the Internet of things (Internet of things, IoT) systems. The IoT is an important component of the future development of information technology, and its main technical feature is to connect objects with networks through the communication technology, thereby achieving an intelligent network of human-to-machine interconnection and interconnection of things. The IoT technology can achieve massive connections, deep coverage, and terminal power savings through, e.g., a narrowband NB technology.

In addition, the terminal device can also include sensors such as smart printers, train detectors, gas stations, and the like. The main functions include collecting data (for some terminal devices), receiving control information and downlink data of a network device, and sending electromagnetic waves to transmit uplink data to the network device. The embodiment of the present application does not limit the specific type or name of the terminal device 101.

The network device 102 can be any device with wireless transmission and reception capabilities. The device includes but is not limited to: a terminal device, various base stations (macro stations, micro stations, pole stations or repeaters, (repeater, RP), and the like), an evolved Node B (evolved Node B, eNB), a radio network controller (radio network controller, RNC), a Node B (Node B, NB), a base station controller (base station controller, BSC), a base transceiver station (base transceiver station, BTS), a home base station (e.g., home evolved NodeB, or home Node B, HNB), a baseband unit (baseband unit, BBU), and an access point (access point, AP), a wireless relay node, a wireless backhaul node, a transmission point (transmission point, TP) or a transmission and reception point (transmission and reception point, TRP) in a wireless fidelity (wireless fidelity, WiFi) system, can also be a gNB in 5G, such as in an NR system, or a transmission point (TRP or TP), one or a group (including multiple antenna panels) of antenna panel of a base station in a 5G system, or can be a network node that makes up the gNB or transmission point, such as a baseband unit (BBU), or a distributed unit (distributed unit, DU) and the like.

In some deployments, the gNB can include a centralized unit (centralized unit, CU) and a DU. The gNB can also include an active antenna unit (active antenna unit, AAU). The CU implements some functions of gNB, while the DU implements some functions of gNB. For example, the CU is responsible for handling non real-time protocols and services, implementing functions of the radio resource control (radio resource control, RRC) and packet data convergence protocol (packet data convergence protocol, PDCP) layers. DU is responsible for handling physical layer protocols and real-time services, implementing functions of the radio link control (radio link control, RLC) layer, medium access control (medium access control, MAC) layer, and physical (PHY) layer. The AAU implements some processing functions of the PHY layer, RF processing, and related functions of active antennas. Due to the fact that the information in the RRC layer ultimately becomes information in the PHY layer, or is transformed from information in the PHY layer, in this architecture, higher layer signaling (such as RRC layer signaling) can also be considered as being sent by the DU or by the DU plus the AAU. It can be understood that the network device can be a device including one or more of a CU node, a DU node, and an AAU node. In addition, the CU can be classified as a network device in a radio access network (radio access network, RAN) or may be classified as a network device in a core network (core network, CN). The specific type or name of the network device 102 is not limited in the embodiment of the present application.

The sensing target 103 can refer to various types of targets that the terminal device needs to sense, which can be different objects based on different actual scenarios. The embodiment of the present application does not impose any limitation on this.

When the terminal device 101 sends a communication signal to the network device 102, the terminal device 101 is a sender of the communication signal and the network device 102 is a receiver of the communication signal. That is to say, transmission and reception of the communication signal are one-way propagation. When the terminal device 101 sending the communication signal, a pathloss of the one-way propagation between the terminal device 101 and network device 102 requires to be calculated in relevant technologies, and a transmit power of the communication signal is determined based on the pathloss and other parameters.

Taking the terminal device sending an uplink sounding reference signal (sounding reference signal, SRS) in a 5G new radio (New Radio, NR) system as an example, a determination method of the transmit power is as follows:

$$P_{SRS} = \min \begin{cases} P_{CMAX} \\ P_{O\_SRS} + 10\log_{10}(M_{SRS}) + \alpha_{SRS} \cdot PL + h \end{cases} \quad (1)$$

where, $P_{CMAX}$ is the maximum allowable transmit power, $P_{O\_SRS}$ is an initial power component, $M_{SRS}$ is a bandwidth of the SRS signal, $\alpha_{SRS}$ is a pathloss compensation factor, PL is a pathloss, and h is a dynamic power adjustment factor. $P_{CMAX}$, $P_{O\_SRS}$, $M_{SRS}$, and $\alpha_{SRS}$ are all determined by higher layer configuration information sent by the network devices; PL is obtained through measuring a pathloss reference signal (pathloss reference signal, PL-RS) by the terminal device, and h is determined by physical control information sent by the network device, which can be various uplink and downlink physical control information. And,

$$PL = referenceSignalPower - higher\ layer\ filtered(RSRP) \quad (2)$$

where, referenceSignalPower is a transmit power of the PL-RS, and higher layer filtered (RSRP) is a higher layer filtered received power of the PL-RS (Reference Signal received power, RSRP). The PL-RS can be a downlink reference signal sent by the network device, with a constant transmit power, which is determined by the higher layer configuration information sent by the network device.

In addition, in the 5G NR system, when transmitting a sidelink signal based on a physical sidelink shared channel (Physical Sidelink Shared Channel, PSSCH), the terminal device needs to consider an interference problem caused by the sidelink signal to the uplink signal reception of the network device. Therefore, the transmit power of the sidelink signal is not greater than the uplink transmit power of the terminal device at the current time. Similar to the above Formula (1), the uplink transmit power is determined by the terminal device based on parameters such as the maximum allowable transmit power of the downlink reference signal, the initial power component, the bandwidth of the downlink reference signal, the pathloss compensation factor, the pathloss, and the dynamic power adjustment factor.

When the terminal device 101 sends a sensing signal to a sensing target 103, a propagation path of the sensing signal is sent from the terminal device 101 to the sensing target 103, and then reflected back to the terminal device 101 by the sensing target 103, and then received by the terminal device 101. That is, when the terminal device 101 performs single-station sensing, the sensing signal propagates bidirectionally, and the terminal device 101 is both the sender and receiver of the sensing signal. In this way, when controlling the transmit power of the sensing signal, the terminal device 101 needs to consider the pathloss of the bidirectional propagation between the terminal device 101 and the sensing target 103, as well as a reflection loss of the sensing target 103.

In related technologies, the terminal devices can achieve power control of the communication signal, but cannot achieve power control of the sensing signal, and cannot achieve normal transmission of the sensing signal.

In the embodiment of the present application, the terminal device receives configuration information; and the configuration information includes a bandwidth of a first sensing signal, a maximum allowable transmit power corresponding to the first sensing signal, and an initial power component; and at a target time, sends the first sensing signal according to a transmit power of the first sensing signal at the target time, where the transmit power of the first sensing signal at the target time is determined based on the configuration information. In this way, the terminal device determines the transmit power of the first sensing signal at the target time based on the configuration information, achieving control of the transmit power of the sensing signal and ensuring the normal transmission of the sensing signal.

Below, a detailed explanation of the scheme shown in the present application will be provided through specific embodiments. It should be noted that the following embodiments can exist independently or be combined with each other. For the same or similar content, it will not be repeated in different embodiments.

In the following, with reference to an embodiment shown in FIG. 2, a power control process will be explained.

FIG. 2 is a flowchart diagram of a power control method provided by an embodiment of the present application. Please refer to FIG. 2, the method may include:

S201, a network device sends configuration information, and a terminal device correspondingly receives the configuration information, where the configuration information includes a bandwidth of a first sensing signal, a maximum allowable transmit power of the first sensing signal, and an initial power component of the first sensing signal.

In the embodiment of the present application, the first sensing signal may refer to a sensing signal that the terminal device is currently configured to send. The bandwidth of the first sensing signal can refer to a signal bandwidth of the sensing signal, which can be represented by $M_{sensing}$. The maximum allowable transmit power corresponding to the first sensing signal can refer to the maximum power allowed to be reached when the terminal device transmits the first sensing signal, which can be represented by $P_{CMAX}$. The initial power component corresponding to the first sensing signal can refer to a corresponding initial power when the terminal device sends the first sensing signal, which can be represented by $P_{O-sensing}$.

Specifically, the configuration information may include one or more of the bandwidth of the first sensing signal, the maximum allowable transmit power of the first sensing signal, and the initial power component of the first sensing signal.

Specific values of the parameters may be configured by a higher layer or determined through other means, which is not limited in the embodiment of the present application. The maximum allowable transmit power and initial power component corresponding to the first sensing signal can be fixed for a period of time. When the configuration information needs to be updated, the network device can resend the configuration information to the terminal device to reconfigure the maximum allowable transmit power and initial power component corresponding to the first sensing signal.

It should be noted that in the power control method of the embodiment of the present application, an executive entity that sends the configuration information may refer to the network device, or may also refer to a chip or a chip module in the network device; similarly, an executive entity on a terminal device side may refer to the terminal device, or may also refer to a chip or a chip module in the terminal device, which is not limited in the embodiment of the present application.

S202, at a target time, the terminal device sends the first sensing signal according to a transmit power of the first sensing signal at the target time, where the transmit power of the first sensing signal at the target time is determined based on the configuration information.

In the embodiment of the present application, the target time may refer to a time when the terminal device sends the first sensing signal, which can be represented by i. When configuring the first sensing signal, the terminal device can determine respective target times for sending the first sensing signal based on an initial position and a transmission cycle of the sensing signal. Correspondingly, the transmit power of the first sensing signal at the target time can be represented by $P_{sensing}$ (i). After receiving the configuration information, the terminal device can calculate, based on the configuration information, the transmit power $P_{sensing}$ (i) for sending the first sensing signal at the target time. In this way, at the target time i, the terminal device can send the first sensing signal according to the $P_{sensing}$ (i), achieving power control of the first sensing signal and ensuring the normal transmission of the first sensing signal.

In the power control method provided by the embodiment of the present application, the terminal device receives the configuration information, where the configuration information includes the bandwidth of the first sensing signal, the maximum allowable transmit power corresponding to the first sensing signal, and the initial power component, and at the target time, sends the first sensing signal according to the transmit power of the first sensing signal at the target time, where the transmit power of the first sensing signal at the target time is determined based on the configuration information. In this way, the terminal device determines the transmit power of the first sensing signal at the target time based on the configuration information, achieving control over the transmit power of the sensing signal and ensuring normal transmission of the sensing signal.

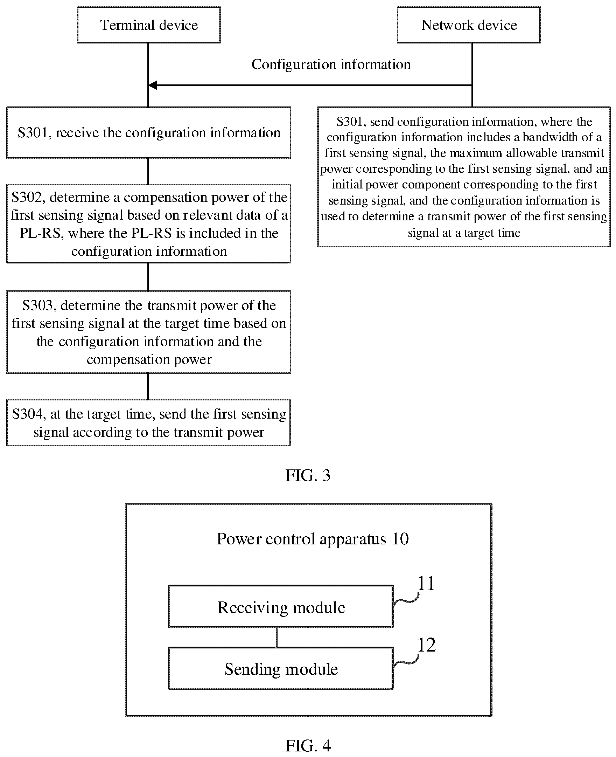

Based on any of the above embodiments, a power control process will be described in detail below in conjunction with the embodiment shown in FIG. 3.

FIG. 3 is a flowchart diagram of another power control method provided by an embodiment of the present application. Please refer to FIG. 3, the method may include:

S301, a network device sends configuration information, and a terminal device correspondingly receives the configuration information, where the configuration information includes a bandwidth of a first sensing signal, a maximum allowable transmit power corresponding to the first sensing signal, and an initial power component corresponding to the first sensing signal, and the configuration information is used to determine a transmit power of the first sensing signal at a target time.

S302, the terminal device determines a compensation power of the first sensing signal based on relevant data of a PL-RS, where the PL-RS is included in the configuration information.

In the embodiment of the present application, during a transmission process of the sensing signal, due to presence of a bidirectional pathloss as well as a reflection loss of a sensing target, the terminal device needs to compensate for this part of the power when determining the transmit power, that is, the terminal device needs to determine the compensation power, which can be represented by $\Delta P$. The configuration information sent by the network device may also include the PL-RS, which is used to indicate that the relevant data of which signal the terminal device calculates the compensation power based on. In this way, the terminal device can calculate the compensation power $\Delta P$ of the first sensing signal based on the PL-RS in the configuration information and the relevant data of the PL-RS.

In a possible implementation, the PL-RS is the first sensing signal, or the PL-RS is a sensing signal other than the first sensing signal.

In the embodiment of the present application, an object of power control for the terminal device is a sensing signal, and a type of PL-RS can be the sensing signal for ensuring the accuracy of power calculation. The PL-RS can be the first sensing signal that the terminal device currently configures, or can be a sensing signal other than the first sensing signal, such as a second sensing signal. When the pathloss reference signal PL-RS is the second sensing signal, the terminal device can approximate the pathloss of the second sensing signal as the pathloss of the first sensing signal, and can calculate the compensation power of the first sensing signal based on the relevant data of the second sensing signal. In this way, by configuring the pathloss reference signal PL-RS, the flexibility of power control for the sensing signal is improved, ensuring a normal implementation of the power control for the sensing signal and improving the sensing accuracy to some extent.

S303, the terminal device determines the transmit power of the first sensing signal at the target time based on the configuration information and the compensation power.

S304, at the target time, the terminal device sends the first sensing signal according to the transmit power.

Optionally, in S303, the compensation power of the first sensing signal can be achieved through any of the following methods 1 to 3.

Method 1: the relevant data of the PL-RS includes a pathloss compensation factor and an average pathloss of the PL-RS; the compensation power of the first sensing signal is a product of the pathloss compensation factor and the average pathloss of the PL-RS; where the average pathloss is determined based on a historical transmit power of the PL-RS and a historical received power of the PL-RS.

In the embodiment of the present application, the historical transmit power can be the power at which the terminal device transmits the PL-RS at a historical time, which can be represented by $P_{sensing}$. The historical time can be flexibly set based on actual requirements, for example, the historical transmit power can be the powers of previous 10 transmissions of the PL-RS by the terminal device. It should be emphasized that in the power control process of communication signals (i.e., at this time, the type of PL-RS is the communication signal), the transmit power of the PL-RS remains fixed and can be determined by higher layer configuration information. However, in the embodiments of the present application, the type of PL-RS is the sensing signal, and its historical transmit power is dynamically changing, and the historical transmit power of this PL-RS can also be directly obtained by the terminal device. The historical received power can be a power at which the terminal device receives the PL-RS at the historical time, which can be represented by RSRP.

The terminal device subtracts the historical received power from the historical transmit power of the PL-RS in the same sensing to obtain the pathloss in that sensing. The average pathloss may refer to an average of pathlosses from multiple sensings. The average pathloss may also refer to a higher layer filtered value of pathloss, which can be represented by higher layer filtered $(P_{sensing}$ - RSRP).

The pathloss compensation factor can refer to a scaling factor of pathloss, which is used to avoid inaccurate measurement of the pathloss to a certain extent, which can be represented by $\alpha_{sensing}$. After determining the average pathloss, the terminal device can scale the average pathloss using the pathloss compensation factor to obtain the compensation power $\Delta P$. The following Formula (3) illustrates a calculation method for the compensation power $\Delta P$ in the embodiment of the present application:

$$\Delta P = \alpha_{sensing} * \text{higher layer filtered}(P_{sensing} - RSRP) \qquad (3)$$

In the embodiment of the present application, the average pathloss is determined based on the historical transmit power and historical received power of the pathloss reference signal PL-RS, and the average pathloss is scaled through the pathloss compensation factor to obtain the compensation power, which improves the rationality and accuracy of determining the compensation power.

Optionally, the pathloss compensation factor is included in the configuration information. At this point, S304 can also be described as determining the transmit power of the first sensing signal at the target time based on the configuration information and the average pathloss. The average pathloss and the pathloss compensation factor in the configuration information are used to determine the compensation power, and other information in the configuration information is used together with the compensation power to determine the transmit power of the first sensing signal at the target time.

In the embodiment of the present application, the configuration information sent by the network device to the terminal device may include the pathloss compensation factor. The terminal device can determine the compensation power based on the average pathloss and the pathloss compensation factor in the configuration information, and then determine the transmit power of the first sensing signal at the target time based on the compensation power and other information in the configuration information (the bandwidth of the first sensing signal, the maximum allowable transmit power corresponding to the first sensing signal, and the initial power component corresponding to the first sensing signal).

Method 2: the relevant data of the PL-RS includes an average power as well as an expected received power of the PL-RS, where the average power is an average historical received power of the PL-RS, and the compensation power of the first sensing signal is a difference between the expected received power and the average power of the PL-RS.

In the embodiment of the present application, the expected received power can refer to a desired received power of the PL-RS, which can be represented by expected RSRP. It should be noted that when the PL-RS is the first sensing signal, the expected received power can be the expected received power corresponding to the first sensing signal; when PL-RS is the sensing signal other than the first sensing signal (such as the second sensing signal), the expected received power can be the expected received power corresponding to other sensing signals (such as the second sensing signal).

The average historical received power can refer to the average of multiple historical received powers of the PL-RS, for example, it can refer to a higher layer filtered value of the historical received power of the PL-RS, which can be represented by higher layer filtered(RSRP). The following Formula (4) illustrates another calculation method for the compensation power ΔP in the embodiment of the present application:

$$\Delta P = \text{expected RSRP} - \text{higher layer filtered(RSRP)} \qquad (4)$$

In the embodiment of the present application, the difference between the expected received power of the PL-RS and the average historical received power is used as the compensation power, which can reduce the complexity of the compensation power calculation and improve the flexibility of the compensation power calculation.

Optionally, the expected received power is included in the configuration information and configured by a higher layer. At this point, S304 can also be described as determining the transmit power of the first sensing signal at the target time based on the configuration information and the average historical received power of the PL-RS. The average historical received power of the PL-RS and the expected received power in the configuration information are used to determine the compensation power, and other information in the configuration information is used together with the compensation power to determine the transmit power of the first sensing signal at the target time.

In the embodiment of the present application, the configuration information sent by the network device to the terminal device may include the expected received power. The terminal device can determine the compensation power based on the average historical received power of the PL-RS and the expected received power in the configuration information, and then determine the transmit power of the first sensing signal at the target time based on the compensation power and other information in the configuration information (the bandwidth of the first sensing signal, the maximum allowable transmit power corresponding to the first sensing signal, and the initial power component corresponding to the first sensing signal).

Method 3: the relevant data of the PL-RS includes a previous received power of the PL-RS and the expected received power of the PL-RS; the compensation power of the first sensing signal is a difference between the expected received power of the PL-RS and the previous received power of the PL-RS.

In the embodiment of the present application, the previous received power may refer to the historical received power at which the PL-RS was received during a previous sensing of the terminal device sending the PL-RS. Taking the current time being i as an example, the previous received power can be expressed as RSRP (i-1). The terminal device can subtract the historical received power at which the PL-RS was received last time from the expected received power of the PL-RS to obtain the compensation power. The following Formula (5) illustrates another calculation method for the compensation power ΔP in the embodiment of the present application:

$$\Delta P = \text{expected RSRP} - \text{RSRP}(i-1) \qquad (5)$$

In the embodiment of the present application, the difference between the expected received power of the PL-RS and the previous received power of the PL-RS is determined as the compensation power. In this way, when sending the first sensing signal, the terminal device can adjust the transmit power based on previous measurement data, without the need for multiple measurements to take the average or higher layer filtering, which improves adjustment speed of the transmit power.

Optionally, the expected received power is included in the configuration information and configured by a higher layer. At this point, S304 can also be described as determining the transmit power of the first sensing signal at the target time based on the configuration information and the previous received power of the PL-RS. The previous received power of the PL-RS and the expected received power in the configuration information are used to determine the compensation power, and other information in the configuration information is used together with the compensation power to determine the transmit power of the first sensing signal at the target time.

In the embodiment of the present application, the configuration information sent by the network device to the terminal device may include the expected received power. The terminal device can determine the compensation power based on the previous received power of the PL-RS and the expected received power in the configuration information, and then determine the transmit power of the first sensing signal at the target time based on the compensation power and other information in the configuration information (the bandwidth of the first sensing signal, the maximum allowable transmit power corresponding to the first sensing signal, and the initial power component corresponding to the first sensing signal).

It should be noted that in specific implementations, there may exist only one of method 1, method 2, or method 3, and the compensation power can be determined by the existing method. There may also exist multiple of method 1, method 2, or method 3, and one method can be selected or configured from the multiple methods to determine the compensation power. The present application does not impose any limitations on this.

In a possible implementation, S304 can be implemented in the following way when specifically implemented: the transmit power of the first sensing signal at the target time is a smaller value between a candidate transmit power and the maximum allowable transmit power; where the candidate transmit power is obtained by linearly multiplying or logarithmically adding the initial power component, the compensation power of the first sensing signal, and a bandwidth factor, and the bandwidth factor is determined based on the bandwidth of the first sensing signal.

In the embodiment of the present application, the bandwidth factor may refer to a power adjustment factor determined based on the bandwidth of the first sensing signal. Usually, transmit power of a signal is calculated based on one resource block (Resource Block, RB), but the bandwidth of the signal may have multiple RBs, such as 10 RBs. Therefore, the terminal device needs to determine the bandwidth factor based on the bandwidth of the first sensing signal to ensure the accuracy of determining the transmit power of the first sensing signal. This bandwidth factor can be expressed as $10\log_{10}M_{sensing}$.

The following Formula (6) illustrates a calculation method for the transmit power in the embodiment of the present application:

$$P_{sensing}(i) = \min \begin{cases} P_{CMAX} \\ P_{O\_sensing} + 10\log_{10}(M_{sensing}) + \Delta P \end{cases} \quad (6)$$

where, calculation of the initial power component $P_{O\text{-}sensing}$, the compensation power $\Delta P$, and the bandwidth factor $10\log_{10}M_{sensing}$ can be done by adding them in a logarithmic domain, that is, all three parts are in logarithmic form, and then a logarithmic addition is performed to obtain the candidate transmit power; it can also be a linear multiplication, that is, the above three parts are calculated as specific real values, and then the three real values are multiplied to obtain the candidate transmit power. After that, the terminal device determines a size relationship between the candidate transmit power and the maximum allowable transmit power $P_{CMAX}$, and the smaller value of the two is determined as the transmit power of the first sensing signal at the target time.

It should be noted that the calculation methods for the compensation power $\Delta P$, the bandwidth factor, or the transmit power $P_{sensing}(i)$ can also be in other forms and are not limited to Formulas (3) to (6) above, which can be flexibly set based on actual requirements, and are not limited by the embodiment of the present application.

In a possible implementation, the transmit power of the first sensing signal is less than or equal to an uplink transmit power at the target time determined by the terminal device.

In the embodiment of the present application, the uplink transmit power may refer to the power when the terminal device transmits uplink information based on a physical uplink shared channel (Physical Uplink Shared Channel, PUSCH) at the target time. Due to the fact that the uplink information sent by the terminal device based on PUSCH is a communication signal, the terminal device can refer to the uplink transmit power of the uplink information at the target time as a hypothetical uplink transmit power; of course, other names may also be used, which is not limited in the present application. The uplink transmit power can be determined in advance by the terminal device or included in the configuration information and configured in advance by a higher layer, which is not limited in the present application.

In the embodiment of the present application, at the target time, the transmit power of the first sensing signal sent by the terminal device does not exceed the uplink transmit power of the terminal device at the target time. This can avoid a situation where the transmit power of the first sensing signal is too high, causing significant interference to the communication environment, and can reduce interference of the sensing signal on the signal transmission and reception between the terminal device and the network device.

In a possible implementation, the transmit power of the first sensing signal is less than or equal to a sidelink transmit power at the target time determined by the terminal device.

In the embodiment of the present application, the sidelink transmit power may refer to the power when the terminal device transmits sidelink information based on a physical sidelink share channel (Physical Sidelink Share Channel, PSSCH) at the target time. Similarly, since the sidelink information sent by the terminal device based on the PSSCH is a communication signal, the terminal device can refer to the sidelink transmit power of the sidelink information at the target time as a hypothetical sidelink transmit power; of course, other names may also be used, which is not limited in the present application. The sidelink transmit power can be determined in advance by the terminal device or included in the configuration information and configured in advance by a higher layer, which is not limited in the present application.

In the embodiment of the present application, at the target time, the transmit power of the first sensing signal sent by the terminal device does not exceed the sidelink transmit power, which can reduce environmental interference and avoid interference on the transmission and reception of sidelink signals between terminal devices.

In the embodiment shown in FIG. 3, the network device sends the configuration information, and the terminal device receives the configuration information, where the configuration information includes the bandwidth of the first sensing signal, the maximum allowable transmit power corresponding to the first sensing signal, and the initial power component; then the terminal device determines the compensation power of the first sensing signal based on the relevant data of PL-RS, where the PL-RS is included in the configuration information; the terminal device determines the transmit power of the first sensing signal at the target time based on the configuration information and the compensation power; at the target time, the terminal device sends the first sensing signal according to the transmit power. In this way, the terminal device calculates the compensation power based on the relevant data of the PL-RS, and then determines the transmit power of the terminal device for the first sensing signal at the target time based on the configuration information and the compensation power, achieving control of the transmit power of the sensing signal, which can ensure the accuracy of power calculation for the first sensing signal, and reduce environmental interference while ensuring sensing accuracy.

FIG. 4 is a schematic structural diagram of a power control apparatus provided by an embodiment of the present application. Please refer to FIG. 4, the power control apparatus 10 may include:

a receiving module 11, configured to receive configuration information, where the configuration information includes a bandwidth of a first sensing signal, a maximum allowable transmit power corresponding to the first sensing signal, and an initial power component corresponding to the first sensing signal; and

a sending module 12, configured to send the first sensing signal at a target time according to a transmit power of the first sensing signal at the target time, where the transmit power of the first sensing signal at the target time is determined based on the configuration information.

The power control apparatus 10 provided by the embodiment of the present application can execute the technical solution shown in the above method embodiments, and its implementation principle and beneficial effects are similar, which will not be repeated here.

In a possible implementation, the transmit power of the first sensing signal at the target time is specifically determined based on the configuration information and a compensation power of the first sensing signal, where the compensation power is determined based on relevant data of a PL-RS, and the PL-RS is included in the configuration information.

In a possible implementation, the PL-RS is the first sensing signal, or the PL-RS is a sensing signal other than the first sensing signal.

In a possible implementation, the relevant data of the PL-RS includes a pathloss compensation factor and an average pathloss of the PL-RS, where the compensation power of the first sensing signal is a product of the pathloss compensation factor and the average pathloss of the PL-RS, and the average pathloss is determined based on a historical transmit power of the PL-RS and a historical received power of the PL-RS.

In a possible implementation, the relevant data of the PL-RS includes an average power and an expected received power of the PL-RS, where the average power is an average historical received power of the PL-RS, and the compensation power of the first sensing signal is a difference between the expected received power of the PL-RS and the average power.

In a possible implementation, the relevant data of the PL-RS includes a previous received power of the PL-RS and the expected received power of the PL-RS, where the compensation power of the first sensing signal is a difference between the expected received power of the PL-RS and the previous received power of the PL-RS.

In a possible implementation, the transmit power of the first sensing signal at the target time is a smaller value between a candidate transmit power and the maximum allowable transmit power, where the candidate transmit power is obtained by linearly multiplying or logarithmically adding the initial power component, the compensation power of the first sensing signal, and a bandwidth factor, where the bandwidth factor is determined based on the bandwidth of the first sensing signal.

In a possible implementation, the transmit power of the first sensing signal is less than or equal to an uplink transmit power at the target time determined by a terminal device.

In a possible implementation, the transmit power of the first sensing signal is less than or equal to a sidelink transmit power at the target time determined by a terminal device.

The power control apparatus 10 provided by the embodiment of the present application can execute the technical solution shown in the above method embodiments, and its implementation principle and beneficial effects are similar, which will not be repeated here. The power control apparatus 10 can specifically be a chip, a chip module, and the like, which is not limited in the embodiment of the present application.

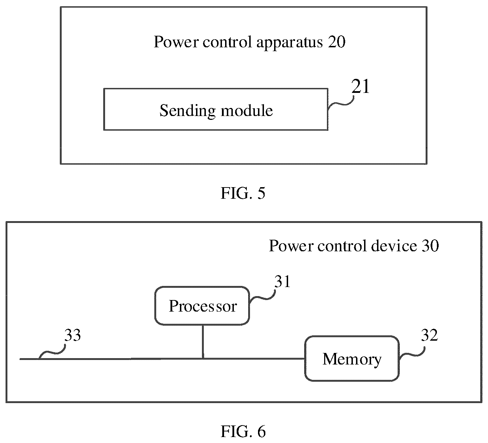

FIG. 5 is a schematic structural diagram of another power control apparatus provided by an embodiment of the present application. Please refer to FIG. 5, the power control apparatus 20 may include:

a sending module, configured to send configuration information, where the configuration information includes a bandwidth of a first sensing signal, a maximum allowable transmit power corresponding to the first sensing signal, and an initial power component corresponding to the first sensing signal, and the configuration information is used to determine a transmit power of the first sensing signal at a target time.

The power control apparatus 20 provided by the embodiment of the present application can execute the technical solution shown in the above method embodiment, and its implementation principle and beneficial effects are similar, which will not be repeated here. The power control apparatus 20 can specifically be a chip, a chip module, and the like, which is not limited in the embodiment of the present application.

FIG. 6 is a structural schematic diagram of a power control device provided in an embodiment of the present application. Please refer to FIG. 6, the power control device 30 may include: a memory 32, a processor 31. By way of example, the memory 32, the processor 31, and other components are interconnected through a bus 33.

The memory 32 is configured to store program instructions;

the processor 31 is configured to execute the program instructions stored in the memory and implement the power control method shown in the above embodiments.

The power control device shown in the embodiment of FIG. 6 can execute the technical solution shown in the above method embodiments, and its implementation principle and beneficial effects are similar, which will not be repeated here.

An embodiment of the present application provides a computer-readable storage medium, which stores computer execution instructions, and the computer execution instructions are used to implement the above power control method when executed by a processor.

An embodiment of the present application may also provide a computer program product, including a computer program, and when the computer program is executed by a processor, the power control method described above can be implemented.

An embodiment of the present application provides a chip storing a computer program, and when the computer program is executed by the chip, the above power control method is implemented.

An embodiment of the present application also provides a chip module storing a computer program, and when the computer program is executed by the chip module, the above power control method can be implemented.

It should be noted that the processor mentioned in the embodiments of the present application may be a central processing unit (central processing unit, CPU), as well as other general-purpose processors, digital signal processors (digital signal processor, DSP), application specific integrated circuits (application specific integrated circuit, ASIC), field programmable gate arrays (field programmable gate array, FPGA) or other programmable logic devices, discrete gates or transistor logic devices, discrete hardware components, and the like. And the general-purpose processor can be a microprocessor or any conventional processor.

It should be understood that the memory mentioned in the embodiments of the present application may be a volatile memory or a non-volatile memory, or may include both the volatile and non-volatile memory. Among them, the non-volatile memory can be a read-only memory (read-only memory, ROM), a programmable read-only memory (programmable read-only memory, PROM), an erasable programmable read-only memory (erasable PROM, EPROM), an electrically erasable programmable read-only memory (electrically EPROM, EEPROM), or a flash memory. The volatile memory can be a random access memory (random access memory, RAM), which is used as an external cache. By way of exemplary but not limiting description, many forms of RAM are available, such as static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchronous link dynamic random access memory (synch link DRAM, SLDRAM), and direct ram bus random access memory (direct ram bus RAM, DR RAM). It should be noted that when the processor is the general-purpose processor, DSP, ASIC, FPGA, or other programmable logic device, discrete gate or transistor logic device, or discrete hardware component, the memory (storage module) is integrated into the processor. It should be noted that the memory described herein is intended to include, but is not limited to, these and any other suitable types of memory.

It should be understood that in the various embodiments of the present application, sizes of serial numbers of the above processes do not imply the order of execution. The order of execution of each process should be determined by its function and internal logic, and should not constitute any limitation on an implementation process of the embodiments of the present application.

Various modules/units included in respective apparatus and products described in the above embodiments can be software modules/units, hardware modules/units, or partially software modules/units and partially hardware modules/units. The respective apparatus and products can be applied to or integrated into a chip, a chip module, or a terminal device. For example, for respective apparatus and products applied to or integrated into a chip, respective modules/chips included therein can be implemented in hardware such as circuits, or at least some modules/units can be implemented in a software program running on a processor integrated inside the chip, while the remaining modules/units can be implemented in hardware such as circuits.

In the present application, the term "include" and its variations may refer to nonlimiting including; the term "or" and its variations can refer to "and/or". Terms "first", "second", and the like in the present application are used to distinguish similar objects and do not necessarily need to be used to describe a specific order or sequence. In the present application, "multiple" refers to two or more than two. "And/or" describes an association relationship between related objects, representing that there can be three types of relationships, for example, A and/or B, which can represent: A exists alone, A and B exist simultaneously, and B exists alone. A character "/" generally indicates that the associated objects before and after are in an "or" relationship.

The above are only partial embodiments of the present application. It should be pointed out that for those with ordinary skill in the art, several improvements and embellishments can be made without departing from principles of the present application. These improvements and embellishments should also be considered as a protection scope of the present application.

**Claims**

1. A power control method, comprising:

   receiving configuration information, wherein the configuration information comprises a bandwidth of a first sensing signal, a maximum allowable transmit power corresponding to the first sensing signal, and an initial power component corresponding to the first sensing signal; and
   sending, at a target time, the first sensing signal according to a transmit power of the first sensing signal at the target time, wherein the transmit power of the first sensing signal at the target time is determined based on the configuration information.

2. The method according to claim 1, wherein the transmit power of the first sensing signal at the target time is specifically determined based on the configuration information and a compensation power of the first sensing signal, wherein the compensation power is determined based on relevant data of PL-RS, and the PL-RS is comprised in the configuration information.

3. The method according to claim 2, wherein the PL-RS is the first sensing signal, or the PL-RS is a sensing signal other than the first sensing signal.

4. The method according to claim 2, wherein the relevant data of the PL-RS comprises a pathloss compensation factor and an average pathloss of the PL-RS, and the compensation power of the first sensing signal is a product of the pathloss compensation factor and the average pathloss of the PL-RS, wherein the average pathloss is determined based on a historical transmit power of the PL-RS and a historical received power of the PL-RS.

5. The method according to claim 2, wherein the relevant data of the PL-RS comprises an average power and an expected received power of the PL-RS, wherein the average power is an average historical received power of the PL-RS, and the compensation power of the first sensing signal is a difference between the expected received power of the PL-RS and the average power.

6. The method according to claim 2, wherein the relevant data of the PL-RS comprises a previous received power of the PL-RS and an expected received power of the PL-RS, and the compensation power of the first sensing signal is a difference between the expected received power of the PL-RS and the previous received power of the PL-RS.

7. The method according to any one of claims 2 to 6, wherein the transmit power of the first sensing signal at the target time is a smaller value between a candidate transmit power and the maximum allowable transmit power, and the candidate transmit power is obtained by linearly multiplying or logarithmically adding the initial power component, the compensation power of the first sensing signal, and a bandwidth factor, wherein the bandwidth factor is determined based on the bandwidth of the first sensing signal.

8. The method according to any one of claims 1 to 7, wherein the transmit power of the first sensing signal is less than or equal to an uplink transmit power at the target time determined by a terminal device.

9. The method according to any one of claims 1 to 8, wherein the transmit power of the first sensing signal is less than or equal to a sidelink transmit power at the target time determined by the terminal device.

10. A power control method, comprising:
    sending configuration information, wherein the configuration information comprises a bandwidth of a first sensing signal, a maximum allowable transmit power corresponding to the first sensing signal, and an initial power component corresponding to the first sensing signal, and the configuration information is used to determine a transmit power of the first sensing signal at a target time.

11. A power control apparatus, comprising:

    a receiving module, configured to receive configuration information, wherein the configuration information comprises a bandwidth of a first sensing signal, a maximum allowable transmit power corresponding to the first sensing signal, and an initial power component corresponding to the first sensing signal; and

a sending module, configured to send the first sensing signal at a target time according to a transmit power of the first sensing signal at the target time, wherein the transmit power of the first sensing signal at the target time is determined based on the configuration information.

12. A power control apparatus, comprising:

a sending module, configured to send configuration information, wherein the configuration information comprises a bandwidth of a first sensing signal, a maximum allowable transmit power corresponding to the first sensing signal, and an initial power component corresponding to the first sensing signal, and the configuration information is used to determine a transmit power of the first sensing signal at a target time.

13. A power control device, comprising: a processor, and a memory; wherein

the memory stores computer execution instructions;

the processor executes the computer execution instructions stored in the memory to implement the method according to any one of claims 1 to 10.

14. A computer-readable storage medium, wherein the computer-readable storage medium stores computer execution instructions, and the computer execution instructions are used to implement the method according to any one of claims 1 to 10 when executed.

15. A computer program product comprising a computer program, wherein the method according to any one of claims 1 to 10 is implemented when the computer program is executed.

16. A chip storing a computer program, wherein the method according to any one of claims 1 to 10 is implemented when the computer program is executed by the chip.

FIG. 1

FIG. 2

Terminal device

Network device

Configuration information

S301, receive the configuration information

S301, send configuration information, where the configuration information includes a bandwidth of a first sensing signal, the maximum allowable transmit power corresponding to the first sensing signal, and an initial power component corresponding to the first sensing signal, and the configuration information is used to determine a transmit power of the first sensing signal at a target time

S302, determine a compensation power of the first sensing signal based on relevant data of a PL-RS, where the PL-RS is included in the configuration information

S303, determine the transmit power of the first sensing signal at the target time based on the configuration information and the compensation power

S304, at the target time, send the first sensing signal according to the transmit power

FIG. 3

Power control apparatus 10

Receiving module — 11

Sending module — 12

FIG. 4

Power control apparatus 20

Sending module  21

FIG. 5

Power control device 30

Processor  31

33

Memory  32

FIG. 6

## INTERNATIONAL SEARCH REPORT

| International application No. |
| --- |
| **PCT/CN2023/108455** |

### A. CLASSIFICATION OF SUBJECT MATTER

H04W 52/14(2009.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

VEN; WPABS; CNTXT; USTXT; EPTXT; CNABS; 3GPP: 功率, 带宽, 感知, 感测, 通感, 信号, 资源, power, bandwidth, sense, perception, signal, resource

### C. DOCUMENTS CONSIDERED TO BE RELEVANT

| Category* | Citation of document, with indication, where appropriate, of the relevant passages | Relevant to claim No. |
| --- | --- | --- |
| X | WO 2022100499 A1 (HUAWEI TECHNOLOGIES CO., LTD.) 19 May 2022 (2022-05-19) description, paragraphs 62-149 and 226-232 | 1-16 |
| A | CN 111757280 A (ALIBABA GROUP HOLDING LIMITED) 09 October 2020 (2020-10-09) entire document | 1-16 |
| A | CN 112752293 A (ASUSTEK COMPUTER INC.) 04 May 2021 (2021-05-04) entire document | 1-16 |
| A | CN 113727446 A (CHINA ACADEMY OF INFORMATION AND COMMUNICATIONS TECHNOLOGY) 30 November 2021 (2021-11-30) entire document | 1-16 |
| A | US 2020359248 A1 (SADEGHI BAHAREH et al.) 12 November 2020 (2020-11-12) entire document | 1-16 |
| A | WO 2022109772 A1 (QUALCOMM INC. et al.) 02 June 2022 (2022-06-02) entire document | 1-16 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **13 October 2023** | **23 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/108455**

| Patent document cited in search report | | | Publication date (day/month/year) | Patent family member(s) | | | Publication date (day/month/year) |
|---|---|---|---|---|---|---|---|
| WO | 2022100499 | A1 | 19 May 2022 | US | 2023284251 | A1 | 07 September 2023 |
| CN | 111757280 | A | 09 October 2020 | None | | | |
| CN | 112752293 | A | 04 May 2021 | KR | 20210053204 | A | 11 May 2021 |
| | | | | KR | 102532032 | B1 | 12 May 2023 |
| | | | | ES | 2926058 | T3 | 21 October 2022 |
| | | | | US | 2022217680 | A1 | 07 July 2022 |
| | | | | US | 2021136731 | A1 | 06 May 2021 |
| | | | | US | 11317381 | B2 | 26 April 2022 |
| | | | | EP | 3817505 | A1 | 05 May 2021 |
| | | | | EP | 3817505 | B1 | 20 July 2022 |
| CN | 113727446 | A | 30 November 2021 | None | | | |
| US | 2020359248 | A1 | 12 November 2020 | US | 11601836 | B2 | 07 March 2023 |
| | | | | US | 2023138224 | A1 | 04 May 2023 |
| | | | | US | 11758427 | B2 | 12 September 2023 |
| WO | 2022109772 | A1 | 02 June 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210869965